# FASCICULE DE BREVET EUROPEEN

(11) **EP 3 123 020 B1**
(45) Date de publication et mention de la délivrance du brevet: **30.01.2019**
(21) Numéro de dépôt: 15717551.4
(22) Date de dépôt: 20.03.2015
(51) Int. Cl.: F02K 3/12, B64D 31/12, F02C 3/10, F02C 9/46, F02C 9/56

(54) **PROCEDE DE DETECTION D'UNE DEFAILLANCE D'UN PREMIER TURBOMOTEUR D'UN HELICOPTERE BIMOTEUR ET DE COMMANDE DU SECOND TURBOMOTEUR, ET DISPOSITIF CORRESPONDANT**
VERFAHREN FÜR DEN NACHWEIS EINES DEFEKTS EINES ERSTEN TURBINENMOTORS EINES ZWEIMOTORIGEN HUBSCHRAUBERS UND FÜR DEN BETRIEB DES ZWEITEN TURBINENMOTORS SOWIE ENTSPRECHENDE VORRICHTUNG
METHOD FOR DETECTING A FAILURE OF A FIRST TURBINE ENGINE OF A TWIN-ENGINE HELICOPTER AND FOR OPERATING THE SECOND TURBINE ENGINE, AND CORRESPONDING DEVICE

(30) Priorité: 27.03.2014 FR 1452642
(43) Date de publication de la demande: 01.02.2017
(73) Titulaire: Safran Helicopter Engines, 64510 Bordes (FR)
(72) Inventeur: LESCHER, Fabien, F-64320 Aressy (FR); MARIN, Jean Philippe, Jacques, F-64110 Jurancon (FR); ETCHEPARE, Philippe, F-64000 Pau (FR)
(74) Mandataire: Gevers & Orès
(86) Numéro de dépôt international: PCT/FR2015/050697
(87) Numéro de publication internationale: WO 2015/145041

(56) Documents cités:
- WO-A1-94/10619
- AU-B2- 657 575
- US-A- 4 500 966
- US-A1- 2013 184 903

## Description

### 1. Domaine technique de l'invention

L'invention concerne un procédé de régulation des turbomoteurs d'un hélicoptère bimoteur. En particulier, l'invention concerne un procédé de détection d'une défaillance d'un premier turbomoteur, dit moteur en panne, d'un hélicoptère bimoteur et de commande du second turbomoteur, dit moteur sain. L'invention concerne également un hélicoptère bimoteur à voilure tournante comprenant un dispositif de détection d'une défaillance d'un premier turbomoteur et de commande d'un second turbomoteur.

### 2. Arrière-plan technologique

L'état de la technique comprend notamment les documents WO-A1-94/10619 et US-A-4 500 966.

Un hélicoptère bimoteur est équipé de deux turbomoteurs qui fonctionnent à des régimes qui dépendent des conditions de vol de l'hélicoptère. Il est connu qu'un hélicoptère bimoteur peut présenter deux régimes principaux, un régime connu sous l'acronyme anglais AEO (*All Engines Operative*) dans lequel les deux turbomoteurs fonctionnent normalement à des régimes prédéterminés, et un régime connu sous l'acronyme anglais OEI (*One Engine Inoperative*) dans lequel un des turbomoteurs est en panne. Ce régime OEI survient suite à la perte d'un moteur. Lorsque cet événement se produit, il est nécessaire que le moteur valide accélère rapidement pour qu'il puisse fournir sa puissance maximale admissible en situation d'urgence, et permettre ainsi à l'hélicoptère de faire face à la situation périlleuse, puis de pouvoir poursuivre son vol.

Dans tout le texte qui suit, le turbomoteur défaillant sera désigné par les termes de « turbomoteur en panne » et le turbomoteur valide sera désigné par les termes de « turbomoteur sain ».

Il se pose donc le problème technique de minimiser la durée qui sépare la détection de la perte de puissance soudaine du turbomoteur en panne et l'obtention de la puissance maximale en régime d'urgence du turbomoteur sain.

En effet, plus cette durée est courte et plus le vol est sûr. En outre, plus cette durée est courte et plus l'hélicoptère peut présenter une masse importante au décollage. La minimisation de la durée qui sépare la détection de la perte de puissance du moteur en panne de l'obtention de la pleine puissance du moteur sain présente donc un double intérêt.

Il est connu aujourd'hui de détecter la perte de puissance du moteur en panne par une comparaison des régimes de fonctionnement des deux turbomoteurs. Si un écart prédéterminé entre les deux régimes de fonctionnement est détecté, le turbomoteur présentant le moins bon régime est déclaré en panne. Cette perte de puissance est détectée par la mise en évidence d'un écart entre les vitesses des turbines à gaz supérieur à un seuil prédéterminé ou d'un écart entre les couples des deux moteurs supérieur à un seuil prédéterminé.

Une fois la perte de puissance détectée, le moteur sain est commandé pour atteindre son régime maximal en régime d'urgence, qui consiste à augmenter les butées maximales de couple et de vitesse de la turbine à gaz jusqu'aux butées maximales autorisées. Par la suite, la chute de la vitesse de rotation de la voilure tournante de l'hélicoptère consécutive à la perte du moteur en panne va entraîner, via la régulation de la vitesse de la voilure tournante par le moteur sain, une augmentation de la consigne de débit de carburant.

Il se pose le problème technique de fournir une meilleure solution pour minimiser davantage la durée qui sépare la détection de la perte de puissance soudaine du turbomoteur en panne et l'obtention de la puissance maximale en régime d'urgence du turbomoteur sain.

### 3. Objectifs de l'invention

L'invention vise à fournir une solution efficace et économique à ce problème technique.

En particulier, l'invention vise à fournir, dans au moins un mode de réalisation de l'invention, un procédé de détection d'une défaillance d'un premier turbomoteur, selon les étapes de la revendication 1, dit moteur en panne, d'un hélicoptère bimoteur et de commande du second turbomoteur, dit moteur sain, qui minimise la durée qui sépare la détection de la défaillance du moteur en panne à l'obtention de la pleine puissance du moteur sain.

L'invention vise aussi à fournir un hélicoptère selon les caractéristiques de la revendication 11.

### 4. Exposé de l'invention

Pour ce faire, l'invention concerne un procédé de détection d'une défaillance d'un premier turbomoteur, dit moteur en panne, d'un hélicoptère bimoteur à voilure tournante et de commande d'un second turbomoteur, dit moteur sain, chaque moteur comprenant des butées de protection régulées par un dispositif de régulation qui définissent un régime de puissance maximale, caractérisé en ce qu'il comprend :
- une étape de détection d'un indice de panne dudit moteur en panne,
- une étape de modification desdites butées de protection dudit moteur sain en des butées de protection correspondant à un régime monomoteur, en cas d'indice de panne détecté,
- une étape de confirmation d'une panne dudit moteur en panne,
- une étape de commande d'une d'augmentation immédiate du débit d'alimentation en carburant dudit moteur sain, en cas de panne confirmée, de manière à permettre une accélération du moteur sain sans attendre une régulation automatique du moteur sain suite à une chute de vitesse de ladite voilure tournante résultant de la panne du moteur en panne.

Un procédé selon l'invention permet donc de basculer le moteur sain d'une configuration bimoteur vers une configuration monomoteur dès qu'un indice de panne est détecté. Cette étape de changement de configuration est réalisée par la modification des butées de protection du moteur en des butées de protection correspondant au régime monomoteur. Une étape subséquente de confirmation de panne est ensuite mise en oeuvre et conditionne la commande de l'augmentation immédiate du débit d'alimentation en carburant du moteur sain. Cette étape de confirmation de panne permet de garantir que l'hélicoptère fait bien face à une perte réelle de puissance, ce qui évite de commander une accélération intempestive du moteur sain, pouvant sinon provoquer une survitesse du rotor. Si la panne est confirmée, le débit de carburant du moteur sain est immédiatement augmenté, ce qui permet d'accélérer rapidement le moteur sain, sans attendre une régulation automatique suite à la chute de la vitesse de rotation de la voilure tournante de l'hélicoptère.

Un procédé selon l'invention permet donc de détecter rapidement une panne d'un moteur et d'atteindre la pleine puissance du moteur sain rapidement après la détection de la panne. Dès qu'un indice de panne est détecté, les protections du moteur sain sont modifiées et augmentées vers les butées de protection correspondant au régime monomoteur. Si la panne est confirmée, la consigne de carburant est modifiée. Le moteur sain étant alors déjà en pleine accélération, du fait de l'augmentation des butées de protection, la pleine puissance en régime monomoteur est rapidement atteinte.

Un procédé selon l'invention présente des phases de détection de la panne du moteur en panne et de commande du moteur sain qui sont imbriquées l'une dans l'autre, ce qui permet de raccourcir la durée entre la détection de la défaillance dudit moteur en panne et l'obtention de la pleine puissance dudit moteur sain.

De manière connue, chaque turbomoteur comprend un générateur de gaz muni d'une chambre de combustion, une turbine libre alimentée en gaz par le générateur de gaz, et un arbre de sortie entraîné en rotation par la turbine libre. Les butées de protection de chaque moteur, qui définissent le régime de puissance maximale de ce moteur, correspondent typiquement à des niveaux de vitesse du générateur de gaz, de couple moteur et/ou de température de la chambre de combustion. Ces butées de protection sont régulées par un dispositif de régulation connu sous l'acronyme anglais FADEC, pour *Full Authority Digital Engine Control.* L'étape de modification des butées de protection permet de modifier, et en pratique d'augmenter, les limites maximales autorisées de ces différents paramètres - vitesse du générateur de gaz, couple moteur, température de la chambre de combustion -. Ces butées passent de leurs niveaux correspondant à un fonctionnement bimoteur à leurs niveaux correspondant à un fonctionnement monomoteur.

Avantageusement et selon l'invention, l'étape de détection d'un indice de panne consiste à :
- récupérer, pour chaque moteur, au moins une mesure d'au moins un paramètre représentatif du régime de fonctionnement des moteurs,
- détecter un écart entre lesdites mesures supérieur, en valeur absolue, à un seuil prédéterminé.

Cette étape permet de récupérer des mesures d'au moins un paramètre représentatif du régime de fonctionnement de chaque moteur et de détecter un écart entre ces mesures qui est supérieur, en valeur absolue, à un seuil prédéterminé. Un tel paramètre représentatif du régime de fonctionnement des moteurs peut être un paramètre mesuré ou un paramètre estimé. Il peut par exemple s'agir de la vitesse de rotation de la turbine à gaz de chaque moteur, ou du couple exercé par un arbre de sortie de chaque turbomoteur mettant en mouvement une boîte de transmission de puissance, ou de la température des gaz à l'entrée de la turbine libre de chaque turbomoteur, ou de l'estimation de la quantité de débit dosé, etc.

Avantageusement et selon cette variante, chaque détection d'un écart entre lesdites mesures est modulée par au moins une variable, dite variable de modulation, représentative de variations normales desdites mesures lors d'un régime de fonctionnement nominal des moteurs.

Selon cette variante avantageuse, chaque mesure d'un écart est modulée par une variable de modulation qui permet de prendre en compte les variations normales des mesures lors d'un régime de fonctionnement nominal. Cela permet donc d'éviter les détections intempestives de panne due en réalité à des variations normales des mesures. Ces variables de modulation permettent donc d'intégrer les variations normales des mesures et donc de diminuer le seuil à partir duquel un écart doit être considéré comme un indice de panne.

Avantageusement et selon cette variante, au moins une variable de modulation est choisie dans le groupe suivant : type de régimes moteurs ; type d'équilibrage effectif des moteurs ; proximité des mesures des vitesses d'arbre et de couple des moteurs des valeurs maximales autorisées pour ces moteurs ; taux d'accélération et de décélération des moteurs ; délai de transmission desdites mesures de chaque paramètre représentatif du régime de fonctionnement des moteurs.

Chacune de ces variables de modulation permet de prendre en compte, lors de la détermination d'un écart entre les mesures d'un paramètre représentatif du régime de fonctionnement des moteurs, des conditions dans lesquelles la mesure a été effectuée, et donc de moduler la mesure de l'écart.

Avantageusement, en variante ou en combinaison, un procédé selon l'invention comprend en outre une étape d'apprentissage d'écarts nominaux entre lesdites mesures d'au moins un paramètre représentatif du régime de fonctionnement des moteurs, au cours de régimes stabilisés desdits moteurs, lesdits écarts nominaux ainsi déterminés constituant une variable de modulation.

Une telle étape d'apprentissage permet de créer une base d'apprentissage qui fournit des écarts entre les mesures d'un paramètre représentatif du régime de fonctionnement des moteurs, qui ne sont pas représentatifs d'une panne d'un des moteurs. Aussi, cette base d'apprentissage fournit des écarts normaux en condition normale de fonctionnement. En d'autres termes, cette base d'apprentissage permet d'affiner le seuil de détection à partir duquel un écart doit être considéré comme un indice de panne.

Avantageusement et selon l'invention, au moins un paramètre représentatif du régime de fonctionnement d'un moteur est une vitesse de rotation dudit générateur de gaz ou un couple exercé par ledit arbre de sortie de ce moteur.

Selon cette variante avantageuse, l'étape de détection d'un indice de panne consiste à comparer les valeurs des vitesses des turbines à gaz et/ou les couples exercés par les arbres de sortie.

Avantageusement et selon l'invention, l'étape de modification des butées de protection dudit moteur sain vers des butées de protection correspondant à un régime monomoteur consiste à augmenter le couple exercé par ledit arbre de sortie et à augmenter la vitesse de rotation dudit générateur de gaz, pour atteindre des valeurs nominales prédéterminées correspondant à un régime monomoteur de pleine puissance.

Avantageusement et selon l'invention, l'étape de confirmation d'une panne dudit premier moteur consiste à vérifier qu'une pluralité de conditions prédéterminées représentatives d'une perte réelle de puissance est vérifiée.

Avantageusement et selon cette variante, lesdites conditions prédéterminées sont les suivantes :
- un écart signé entre la vitesse de rotation dudit générateur de gaz dudit moteur en panne et la vitesse de rotation dudit générateur de gaz dudit moteur sain est supérieur à l'écart mesuré dans ladite étape de détection d'un indice pour ce paramètre,
- un écart signé entre le couple dudit arbre de sortie dudit moteur en panne et le couple dudit arbre de sortie dudit moteur sain est supérieur à l'écart mesuré dans ladite étape de détection d'un indice,
- une vitesse de rotation de ladite turbine libre dudit moteur en panne est inférieure à une valeur de consigne prédéterminée retranchée d'un offset prédéterminé,
- une dérive temporelle de la vitesse de rotation dudit générateur à gaz dudit moteur sain est supérieure à un seuil prédéterminé,
- une dérive temporelle de la vitesse de rotation dudit générateur à gaz dudit moteur en panne est inférieure à un seuil prédéterminé.

L'ensemble des conditions prédéterminées susmentionnées permet de confirmer la panne dudit moteur en panne. En d'autres termes, il permet de discriminer une perte réelle de puissance sur le moteur en panne d'une autre cause ayant pu conduire à la détection d'un indice de panne par la mise en évidence d'un écart supérieur à un seuil prédéterminé.

Avantageusement et selon l'invention, ladite étape de commande d'une d'augmentation du débit d'alimentation en carburant dudit moteur sain, consiste à commuter une loi d'anticipation de puissance, reliant une mesure du pas collectif des pales dudit hélicoptère à une consigne de vitesse dudit générateur de gaz, en configuration bimoteur en une loi d'anticipation en configuration monomoteur.

Selon cette variante, l'augmentation du débit de carburant dans le moteur sain consiste à commuter une loi d'anticipation de puissance en configuration bimoteur à une loi d'anticipation en configuration monomoteur.

L'invention concerne un hélicoptère bimoteur à voilure tournante comprenant un dispositif de détection d'une défaillance d'un premier turbomoteur, dit moteur en panne, d'un hélicoptère bimoteur et de commande d'un second turbomoteur, chaque moteur comprenant des butées de protection régulées par un dispositif de régulation qui définissent un régime de puissance maximale, dit moteur sain comprenant:
- un module de détection d'un indice de panne dudit moteur en panne,
- un module de modification desdites butées de protection dudit moteur sain en des butées de protection correspondant à un régime monomoteur, en cas d'indice de panne détecté,
- un module de confirmation d'une panne dudit moteur en panne,
- un module de commande d'une d'augmentation du débit d'alimentation en carburant dudit moteur sain en cas de panne confirmée.

Un hélicoptère selon l'invention met avantageusement en oeuvre un procédé selon l'invention et un procédé selon l'invention est avantageusement mis en oeuvre par un hélicoptère selon l'invention.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable ou tout matériel équivalent. D'une manière générale, un module est donc un élément (logiciel et/ou matériel) qui permet d'assurer une fonction.

L'invention concerne également un procédé de détection d'une défaillance d'un premier turbomoteur d'un hélicoptère bimoteur, et de commande d'un second turbomoteur, un dispositif correspondant, et un hélicoptère comprenant un tel dispositif, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une architecture bimoteur pour la mise en oeuvre du procédé selon un mode de réalisation de l'invention,
- la figure 2 est une vue schématique d'un procédé selon un mode de réalisation de l'invention.

### 6. Description détaillée d'un mode de réalisation de l'invention

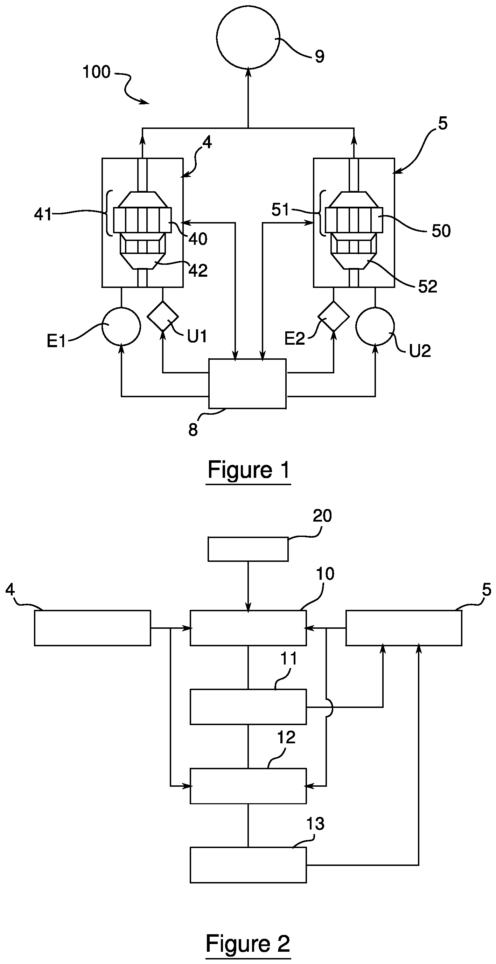

La figure 1 illustre schématiquement un exemple d'architecture 100 d'un hélicoptère bimoteur adaptée à la mise en oeuvre d'un procédé selon l'invention. Chaque turbomoteur 4, 5 comporte respectivement et de manière classique un générateur 41, 51 de gaz et une turbine libre 42, 52, alimentée par le générateur 41, 51 de gaz pour fournir de la puissance. La sortie des turbomachines est reliée à une boîte 9 de transmission de puissance. Chaque générateur 41, 51 de gaz comprend en outre une chambre 40, 50 de combustion alimentée en carburant par un circuit de distribution de carburant non représenté sur la figure à des fins de clarté.

Chaque turbomoteur 4, 5 est couplé à des moyens d'entraînement El, E2 et à des dispositifs d'assistance d'urgence U1, U2.

Chaque moyen d'entraînement El, E2 en rotation du générateur de gaz respectif 41, 51 peut être constitué par un démarreur alimenté respectivement par un dispositif démarreur/générateur équipant l'autre turbomachine.

Les moyens d'entraînement El, E2, les dispositifs d'assistance d'urgence U1, U2 et les commandes des turbomachines 4, 5 sont gérés par un dispositif 8 de régulation. Ce dispositif de régulation est adapté pour réguler les butées de protection qui définissent le régime de puissance maximale de chaque moteur.

La figure 2 est une représentation schématique d'un procédé selon un mode de réalisation de l'invention. Un procédé selon ce mode de réalisation de l'invention comprend une étape 10 de détection d'un indice de panne du premier turbomoteur 4, dit moteur en panne, par la mesure d'un écart supérieur à un seuil prédéterminé entre des valeurs fournies par ce turbomoteur 4 en panne et le turbomoteur 5 sain, pour au moins un paramètre représentatif du régime de fonctionnement des moteurs 4, 5.

Dans tout le texte, les termes « moteur » et « turbomoteur » sont synonymes et sont donc utilisés pour désigner un dispositif de fourniture de puissance pour un hélicoptère. Les blocs 4, 5 de la figure 2 représente respectivement le turbomoteur en panne et le turbomoteur sain, y compris les organes de puissance et de commande. La figure 2 ne vise qu'à présenter le séquençage des étapes du procédé et les principales interactions avec les deux turbomoteurs.

Le procédé comprend en outre une étape 11 de modification et d'augmentation des butées de protection du turbomoteur 5 sain vers des butées de protection correspondant à un régime monomoteur de pleine puissance. Cette modification des butées est effectuée en cas d'indice de panne détecté à l'étape 10. Ces butées de protection sont la vitesse de rotation du générateur de gaz, le couple sur l'arbre de sortie et la température de la chambre de combustion.

Le procédé comprend en outre une étape 12 de confirmation de la panne du turbomoteur 4 en panne par la mesure d'un écart supérieur à un seuil prédéterminé entre les valeurs fournies par ce turbomoteur 4 en panne et le turbomoteur 5 sain, pour une pluralité de paramètres représentatifs du régime de fonctionnement des moteurs.

Enfin le procédé comprend une étape 13 de commande d'une augmentation du débit d'alimentation en carburant du turbomoteur 5 sain en cas de panne confirmée.

Chaque étape va maintenant être décrite plus en détail.

L'étape 10 de détection d'un indice de panne consiste à récupérer, pour chaque moteur 4, 5, une mesure d'au moins un paramètre représentatif du régime de fonctionnement des moteurs et de détecter un écart entre lesdites mesures supérieur, en valeur absolue, à un seuil prédéterminé. Ce paramètre est par exemple la vitesse de rotation du générateur 41, 51 de gaz de chaque moteur ou le couple de l'arbre de sortie.

La mesure de l'écart entre les valeurs est modulée par au moins une variable 20 de modulation représentative de variations normales des mesures lors d'un régime de fonctionnement nominal des moteurs 4, 5. Cette variable 20 est par exemple représentative du type de régimes moteurs, du type d'équilibrage effectif des moteurs, de la proximité des mesures des vitesses d'arbre et de couple des moteurs des valeurs maximales autorisées pour ces moteurs, du taux d'accélération et de décélération des moteurs ou du délai de transmission desdites mesures de chaque paramètre représentatif du régime de fonctionnement des moteurs.

A l'étape 10 de détection d'un indice, l'écart entre les valeurs fournies par les moteurs est donc calculé, puis modulé par la variable 20 de modulation. Si un écart supérieur à un seuil prédéterminé est décelé, alors un indice de panne du moteur 4 est détecté.

Par exemple, si l'on considère la vitesse de rotation du générateur de gaz et selon un mode de réalisation, le seuil prédéterminé à partir duquel un écart est considéré comme suffisamment significatif pour caractériser une panne, est de 1%. Si l'on considère le couple moteur, le seuil prédéterminé est fixé à 7%.

L'étape 11 consiste alors à commander la pleine puissance du moteur 5 de telle sorte qu'il atteigne des valeurs nominales de fonctionnement monomoteur, pour pallier la défaillance du moteur 4. De manière classique, cette commande vise à augmenter la vitesse de rotation de la turbine à gaz et le couple en sortie de turbomoteur.

L'étape 12 consiste à vérifier que le moteur 4 est bien en panne. Pour ce faire, les tests suivants sont effectués. Il est vérifié qu'un écart signé entre la vitesse de rotation du générateur 41 de gaz du moteur 4 en panne et la vitesse de rotation du générateur 51 de gaz du moteur 5 sain est supérieur à l'écart mesuré dans l'étape 10 de détection d'un indice lorsque le paramètre représentatif du régime de fonctionnement des moteurs est la vitesse de rotation des générateurs de gaz des moteurs. Il est aussi vérifié que l'écart signé entre le couple de l'arbre de sortie du moteur 4 en panne et le couple de l'arbre de sortie du moteur 5 sain est supérieur à l'écart mesuré au cours de l'étape de détection d'un indice lorsque le paramètre représentatif du régime de fonctionnement des moteurs est le couple des moteurs. Il est aussi vérifié que la vitesse de rotation de la turbine 42 libre du moteur 4 en panne est inférieure à une valeur de consigne prédéterminée retranchée d'un offset prédéterminé (par exemple, cet offset est fixé à 0,75% de la vitesse de la turbine libre et la valeur de consigne est la vitesse nominale de la turbine libre). Il est aussi vérifié que la dérive temporelle de la vitesse de rotation du générateur 51 de gaz du moteur 5 sain est supérieure à un seuil prédéterminé (par exemple, le seuil prédéterminé pour la dérive temporelle du moteur sain est fixé à 1% de la vitesse du générateur de gaz par seconde). Il est enfin vérifié que la dérive temporelle de la vitesse de rotation du générateur 41 de gaz du moteur 4 en panne est inférieure à un seuil prédéterminé (par exemple, le seuil prédéterminé pour la dérive temporelle du moteur en panne est fixé à 5% de la vitesse du générateur de gaz par seconde).

Si l'ensemble des conditions susmentionnées est vérifié, la panne du moteur 4 est confirmée et une commande à destination du moteur 5 sain est initiée pour augmenter le débit de carburant du moteur 5 sain.

Selon un mode de réalisation de l'invention, cette augmentation du débit de carburant est obtenue par la commutation d'une loi d'anticipation de puissance, reliant une mesure du pas collectif des pales de l'hélicoptère bimoteur à une consigne de vitesse du générateur 51 de gaz, en configuration bimoteur en une loi d'anticipation en configuration monomoteur. Cette commutation de lois d'anticipation engendre un saut de consigne de débit faisant accélérer soudainement le moteur 5 sain, tout en garantissant les protections du moteur 5 (vitesse maximale, couple maximal, température maximale, absence de pompage, etc.).

Un procédé selon l'invention est avantageusement mis en oeuvre par un dispositif de détection d'une défaillance du premier turbomoteur en panne, d'un hélicoptère bimoteur et de commande du second turbomoteur sain comprenant :
- un module de détection d'un indice de panne dudit moteur en panne,
- un module de modification desdites butées de protection dudit moteur sain en des butées de protection correspondant à un régime monomoteur, en cas d'indice de panne détecté,
- un module de confirmation d'une panne dudit moteur en panne,
- un module de commande d'une d'augmentation du débit d'alimentation en carburant dudit moteur sain en cas de panne confirmée.

Selon un mode de réalisation avantageux, ce dispositif est logé dans le dispositif 8 de régulation et ce dispositif 8 de régulation fait office de module de détection, de module de modification des butées, de module de confirmation de panne et de module de commande.

Selon un mode de réalisation avantageux, le dispositif comprend un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'invention, lorsque ledit programme est exécuté sur un ordinateur. Ce produit programme d'ordinateur est par exemple destiné à être exécuté par le dispositif 8 de régulation.

## Revendications

1. Procédé de détection d'une défaillance d'un premier turbomoteur, dit moteur (4) en panne, d'un hélicoptère bimoteur à voilure tournante et de commande d'un second turbomoteur, dit moteur (5) sain, chaque moteur (4, 5) comprenant des butées de protection régulées par un dispositif (8) de régulation qui définissent un régime de puissance maximale, **caractérisé en ce qu'**il comprend :
- une étape (10) de détection d'un indice de panne dudit moteur (4) en panne,
- une étape (11) de modification desdites butées de protection dudit moteur (5) sain en des butées de protection correspondant à un régime monomoteur de puissance maximale, en cas d'indice de panne détecté,
- une étape (12) de confirmation d'une panne dudit moteur (4) en panne,
- une étape (13) de commande d'une d'augmentation immédiate du débit d'alimentation en carburant dudit moteur (5) sain, en cas de panne confirmée, de manière à permettre une accélération du moteur sain sans attendre une régulation automatique du moteur sain suite à une chute de vitesse de ladite voilure tournante résultant de la panne du moteur en panne.

2. Procédé selon la revendication 1, **caractérisé en ce que** ladite étape (10) de détection d'un indice de panne consiste à :
- récupérer, pour chaque moteur, au moins une mesure d'au moins un paramètre représentatif du régime de fonctionnement des moteurs,
- détecter un écart entre lesdites mesures supérieur, en valeur absolue, à un seuil prédéterminé.

3. Procédé selon la revendication 2, **caractérisé en ce que** chaque détection d'un écart entre lesdites mesures est modulée par au moins une variable, dite variable (20) de modulation, représentative de variations normales desdites mesures lors d'un régime de fonctionnement nominal des moteurs (4, 5).

4. Procédé selon la revendication 3, **caractérisé en ce qu'**au moins une variable (20) de modulation est choisie dans le groupe suivant : type de régimes moteurs (4, 5) ; type d'équilibrage effectif des moteurs (4, 5) ; proximité des mesures des vitesses d'arbre et de couple des moteurs (4, 5) des valeurs maximales autorisées pour ces moteurs ; taux d'accélération et de décélération des moteurs (4, 5) ; délai de transmission desdites mesures de chaque paramètre représentatif du régime de fonctionnement des moteurs.

5. Procédé selon l'une des revendications 3 ou 4, **caractérisé en ce qu'**il comprend en outre une étape d'apprentissage d'écarts nominaux entre lesdites mesures d'au moins un paramètre représentatif du régime de fonctionnement des moteurs (4, 5), au cours de régimes stabilisés desdits moteurs, lesdits écarts nominaux ainsi déterminés constituant une variable de modulation (20).

6. Procédé selon l'une des revendications 2 à 5, dans lequel chaque moteur comprend un générateur de gaz alimentant une turbine libre qui entraîne en rotation un arbre de sortie, **caractérisé en ce qu'**au moins un paramètre représentatif du régime de fonctionnement d'un moteur (4, 5) est une vitesse de rotation dudit générateur de gaz ou un couple exercé par ledit arbre de sortie de ce moteur.

7. Procédé selon la revendication 6, **caractérisé en ce que** ladite étape (11) de modification des butées de protection dudit moteur (5) en des butées correspondant à un régime monomoteur consiste à augmenter le couple exercé par ledit arbre de sortie et à augmenter la vitesse de rotation dudit générateur (51) de gaz, pour atteindre des valeurs nominales prédéterminées correspondant à un régime monomoteur de puissance maximale.

8. Procédé selon l'une des revendications 1 à 7, **caractérisé en ce que** ladite étape (12) de confirmation d'une panne dudit premier moteur consiste à vérifier qu'une pluralité de conditions prédéterminées représentatives d'une perte réelle de puissance est vérifiée.

9. Procédé selon les revendications 6 et 8 prises ensemble, caractérisé en que lesdites conditions prédéterminées sont les suivantes :
- un écart signé entre la vitesse de rotation dudit générateur (41) de gaz dudit moteur (4) en panne et la vitesse de rotation dudit générateur (51) de gaz dudit moteur (5) sain est supérieur à l'écart mesuré dans ladite étape (10) de détection d'un indice pour ce paramètre,
- un écart signé entre le couple dudit arbre de sortie dudit moteur (4) en panne et le couple dudit arbre de sortie dudit moteur (5) sain est supérieur à l'écart mesuré dans ladite étape (10) de détection d'un indice,
- une vitesse de rotation de ladite turbine (42) libre dudit moteur (4) en panne est inférieure à une valeur de consigne prédéterminée retranchée d'un offset prédéterminé,
- une dérive temporelle de la vitesse de rotation dudit générateur (51) à gaz dudit moteur (5) sain est supérieure à un seuil prédéterminé,
- une dérive temporelle de la vitesse de rotation dudit générateur (41) à gaz dudit moteur (4) en panne est inférieure à un seuil prédéterminé.

10. Procédé selon la revendication 9, **caractérisé en ce que** ladite étape (13) de commande d'une d'augmentation du débit d'alimentation en carburant dudit moteur (5) sain, consiste à commuter une loi d'anticipation de puissance, reliant une mesure du pas collectif des pales dudit hélicoptère à une consigne de vitesse dudit générateur de gaz, en configuration bimoteur en une loi d'anticipation en configuration monomoteur.

11. Hélicoptère bimoteur à voilure tournante comprenant au moins un premier turbomoteur, dit moteur (4) en panne, et au moins un second turbomoteur, dit moteur (5) sain, chaque moteur (4, 5) comprenant des butées de protection régulées par un dispositif (8) de régulation qui définissent un régime de puissance maximale, **caractérisé en ce qu'**il comprend un dispositif de détection d'une défaillance dudit moteur (4) en panne et de commande dudit moteur (5) sain, ledit dispositif comprenant :
- un module de détection d'un indice de panne dudit moteur (4) en panne,
- un module d'augmentation des butées de protection dudit moteur (5) sain en des butées correspondant à un régime monomoteur, en cas d'indice de panne détecté,
- un module de confirmation d'une panne dudit moteur (4) en panne,
- un module de commande d'une augmentation immédiate du débit d'alimentation en carburant dudit moteur (5) sain, en cas de panne confirmée, de manière à permettre une accélération du moteur (5) sain sans attendre une régulation automatique du moteur (5) sain suite à une chute de vitesse de ladite voilure tournante résultant de la panne du moteur (4) en panne.

## Patentansprüche

1. Verfahren für das Erfassen eines Ausfalls eines ersten Turbomotors, defekter Motor (4) genannt, eines zweimotorigen Hubschraubers mit drehendem Tragwerk, und für das Steuern eines zweiten Turbomotors, einwandfreier Motor (5) genannt, wobei jeder Motor (4, 5) Schutzanschläge umfasst, die durch eine Regelungsvorrichtung (8) geregelt sind, die einen Höchstleistungsbetrieb definieren, **dadurch gekennzeichnet, dass** es umfasst:
- einen Schritt (10) eines Erfassens eines Defektanzeichens des defekten Motors (4),
- einen Schritt (11) eines Modifizierens der Schutzanschläge des einwandfreien Motors (5) in Schutzanschläge, die einem einmotorigen Höchstleistungsbetrieb entsprechen, im Falle eines erfassten Defektanzeichens,
- einen Schritt (12) eines Bestätigens eines Defekts des defekten Motors (4),
- einen Schritt (13) eines Steuerns einer unverzüglichen Erhöhung der Kraftstoffversorgungsrate des einwandfreien Motors (5), im Falle eines bestätigten Defekts, sodass eine Beschleunigung des einwandfreien Motors ohne Abwarten einer automatischen Regelung des einwandfreien Motors infolge eines Geschwindigkeitsabfalls des drehenden Tragwerks, der sich aus dem Defekt des defekten Motors ergibt, ermöglicht wird.

2. Verfahren nach Anspruch 1, **dadurch gekennzeichnet, dass** der Schritt (10) des Erfassens eines Defektanzeichens darin besteht:
- für jeden Motor, mindestens eine Messung mindestens eines Parameters, der für einen Funktionsbetrieb des Motors repräsentativ ist, zurückzugewinnen,
- einen Unterschied zwischen den Messungen zu erfassen, der im Absolutwert größer als ein vorbestimmter Schwellenwert ist.

3. Verfahren nach Anspruch 2, **dadurch gekennzeichnet, dass** jedes Erfassen eines Unterschieds zwischen den Messungen durch mindestens eine Variable, Modulationsvariable (20) genannt, moduliert wird, die für normale Variationen der Messungen bei einem normalen Funktionsbetrieb der Motoren (4, 5) repräsentativ ist.

4. Verfahren nach Anspruch 3, **dadurch gekennzeichnet, dass** mindestens eine Modulationsvariable (20) aus der folgenden Gruppe ausgewählt ist: Betriebstyp der Motoren (4, 5); Typ des effektiven Auswuchtens der Motoren (4, 5); Nähe der Messungen der Wellen- und Drehmomentgeschwindigkeiten der Motoren (4, 5) zu den erlaubten Höchstwerten für diese Motoren; Beschleunigungs- und Verlangsamungsgrade der Motoren (4, 5); Übertragungszeit der Messungen von jedem für den Funktionsbetrieb der Motoren repräsentativen Paramater.

5. Verfahren nach einem der Ansprüche 3 oder 4, **dadurch gekennzeichnet, dass** es weiter einen Schritt des Lernens nominaler Unterschiede zwischen den Messungen von mindestens einem Parameter, der für den Funktionsbetrieb der Motoren (4, 5) repräsentativ ist, während stabilisierter Betriebe der Motoren umfasst, wobei die so bestimmten nominalen Unterschiede eine Modulationsvariable (20) bilden.

6. Verfahren nach einem der Ansprüche 2 bis 5, wobei jeder Motor einen Gasgenerator umfasst, der eine freie Turbine versorgt, die eine Ausgangswelle rotatorisch antreibt, **dadurch gekennzeichnet, dass** mindestens ein Parameter, der für den Funktionsbetrieb eines Motors (4, 5) repräsentativ ist, eine Drehzahl des Gasgenerators oder ein Drehmoment ist, das durch die Ausgangswelle dieses Motors ausgeübt wird.

7. Verfahren nach Anspruch 6, **dadurch gekennzeichnet, dass** der Schritt (11) des Modifizierens der Schutzanschläge des Motors (5) in Anschläge, die einem einmotorigen Betrieb entsprechen, darin besteht, das Drehmoment, das durch die Ausgangswelle ausgeübt wird, zu erhöhen und darin, die Drehzahl des Gasgenerators (51) zu erhöhen, um vorbestimmte nominale Werte zu erreichen, die einem einmotorigen Höchstleistungsbetrieb entsprechen.

8. Verfahren nach einem der Ansprüche 1 bis 7, **dadurch gekennzeichnet, dass** der Schritt (12) des Bestätigens eines Defekts des ersten Motors darin besteht, zu überprüfen, dass eine Vielzahl von vorbestimmten Bedingungen, die für einen tatsächlichen Leistungsverlust repräsentativ sind, überprüft sind.

9. Verfahren nach den Ansprüchen 6 und 8 zusammengenommen, **dadurch gekennzeichnet, dass** die vorbestimmten Bedingungen die folgenden sind:
- ein gezeichneter Unterschied zwischen der Drehzahl des Gasgenerators (41) des defekten Motors (4) und der Drehzahl des Gasgenerators (51) des einwandfreien Motors (5) ist größer als der in Schritt (10) des Erfassens eines Anzeichens für diesen Parameter gemessene Unterschied,
- ein gezeichneter Unterschied zwischen dem Drehmoment der Ausgangswelle des defekten Motors (4) und dem Drehmoment der Ausgangswelle des einwandfreien Motors (5) ist größer als der in Schritt (10) des Erfassens eines Anzeichens gemessene Unterschied,
- eine Drehzahl der freien Turbine (42) des defekten Motors (4) ist kleiner als ein vorbestimmter Sollwert, der von einem vorbestimmten Versatz abgezogen wird,
- eine vorübergehende Abweichung der Drehzahl des Gasgenerators (51) des einwandfreien Motors (5) ist größer als ein vorbestimmter Schwellenwert,
- eine vorübergehende Abweichung der Drehzahl des Gasgenerators (41) des defekten Motors (4) ist kleiner als ein vorbestimmter Schwellenwert.

10. Verfahren nach Anspruch 9, **dadurch gekennzeichnet, dass** der Schritt (13) des Steuerns einer Erhöhung der Kraftstoffversorgungsrate des einwandfreien Motors (5) darin besteht, ein Leistungsvorhersagegesetz in zweimotoriger Konfiguration, das eine Messung der kollektiven Verstellung der Blätter des Hubschraubers mit einem Geschwindigkeitssollwert des Gasgenerators verbindet, in ein Leistungsvorhersagegesetz in einmotoriger Konfiguration umzuwandeln.

11. Zweimotoriger Hubschrauber mit drehendem Tragwerk, umfassend mindestens einen ersten Turbomotor, defekter Motor (4) genannt, und mindestens einen zweiten Turbomotor, einwandfreier Motor (5) genannt, wobei jeder Motor (4, 5) Schutzanschläge umfasst, die durch eine Regelungsvorrichtung (8) geregelt sind, die einen Höchstleistungsbetrieb definieren, **dadurch gekennzeichnet, dass** er eine Vorrichtung zum Erfassen eines Ausfalls des defekten Motors (4) und zum Steuern des einwandfreien Motors (5) umfasst, wobei die Vorrichtung umfasst:
- ein Modul eines Erfassens eines Defektanzeichens des defekten Motors (4),
- ein Modul eines Erhöhens der Schutzanschläge des einwandfreien Motors (5) in Schutzanschläge, die einem einmotorigen Betrieb entsprechen, im Falle eines erfassten Defektanzeichens,
- ein Modul eines Bestätigens eines Defekts des defekten Motors (4),
- ein Modul eines Steuerns einer unverzüglichen Erhöhung der Kraftstoffversorgungsrate des einwandfreien Motors (5), im Fall eines bestätigten Defekts, sodass eine Beschleunigung des einwandfreien Motors (5) ohne Abwarten einer automatischen Regelung des einwandfreien Motors (5) infolge eines Geschwindigkeitsabfalls des drehenden Tragwerks, der sich aus dem Defekt des defekten Motors (4) ergibt, ermöglicht wird.

## Claims

1. Method for detecting a malfunction in a first turboshaft engine, referred to as an inoperative engine (4), of a twin-engine helicopter having a rotary wing, and for controlling a second turboshaft engine, referred to as a healthy engine (5), each engine (4, 5) comprising protective stops regulated by a regulation device (8) which define a maximum power regime, **characterised in that** it comprises:
- a step (10) of detecting an indication of failure of said inoperative engine (4),
- a step (11) of modifying said protective stops of said healthy engine (5) into protective stops which correspond to a maximum power single-engine regime, in the case of the detected indication of failure,
- a step (12) of confirming a failure of said inoperative engine (4),
- a step (13) of controlling an immediate increase in the flow rate of fuel supply of said healthy engine (5), in the event of a confirmed failure, so as to allow an acceleration of the healthy engine without waiting for an automatic regulation of the healthy engine after a fall in speed of said rotary wing resulting from the failure of the inoperative engine.

2. Method according to claim 1, **characterised in that** said step (10) of detecting an indication of failure consists in:
- retrieving, for each engine, at least one measurement of at least one parameter which is representative of the operating regime of the engines,
- detecting a difference between said measurements which is greater, in terms of absolute value, than a predetermined threshold.

3. Method according to claim 2, **characterised in that** each detection of a difference between said measurements is modulated by at least one variable, referred to as a modulation variable (20), which is representative of normal variations in said measurements during a nominal operating regime of the engines (4, 5).

4. Method according to claim 3, **characterised in that** at least one modulation variable (20) is selected from the following group: type of engine regimes (4, 5); type of effective balancing of the engines (4, 5); proximity of the measurements of the shaft and torque speeds of the engines (4, 5) to the maximum permissible values for said engines; acceleration and deceleration rates of the engines (4, 5); period of transmission of said measurements of each parameter which is representative of the operating regime of the engines.

5. Method according to either claim 3 or claim 4, **characterised in that** it further comprises a step of learning nominal differences between said measurements of at least one parameter which is representative of the operating regime of the engines (4, 5), during stabilised regimes of said engines, said nominal differences which are determined in this way constituting a modulation variable (20).

6. Method according to any of claims 2 to 5, wherein each engine comprises a gas generator powering a free turbine which sets into rotation an output shaft, **characterised in that** at least one parameter which is representative of the operating regime of an engine (4, 5) is a rotational speed of said gas generator or a torque exerted by said output shaft of this engine.

7. Method according to claim 6, **characterised in that** said step (11) of modifying the protective stops of said engine (5) into stops corresponding to a single-engine regime consists in increasing the torque exerted by said output shaft and in increasing the rotational speed of said gas generator (51) in order to achieve predetermined rated values corresponding to a maximum power single-engine regime.

8. Method according to any of claims 1 to 7, **characterised in that** said step (12) of confirming a failure of said first engine consists in verifying that multiple predetermined conditions which are representative of a real loss of power are verified.

9. Method according to claims 6 and 8 taken together, **characterised in that** said predetermined conditions are as follows:
- a signed difference between the rotational speed of said gas generator (41) of said inoperative engine (4) and the rotational speed of said gas generator (51) of said healthy engine (5) is greater than the difference measured in said step (10) of detecting an index for this parameter,
- a signed difference between the torque of said output shaft of said inoperative engine (4) and the torque of said output shaft of said healthy engine (5) is greater than the difference measured in said step (10) of detecting an index,
- a rotational speed of said free turbine (42) of said inoperative engine (4) is less than a predetermined setpoint value which is subtracted from a predetermined offset,
- a time derivative of the rotational speed of said gas generator (51) of said healthy engine (5) is greater than a predetermined threshold,
- a time derivative of the rotational speed of said gas generator (41) of said inoperative engine (4) is less than a predetermined threshold.

10. Method according to claim 9, **characterised in that** said step (13) of controlling an increase in the flow rate of fuel supply of said healthy engine (5) consists in switching law of anticipation power, which links a measurement of the collective pitch of the blades of said helicopter to a speed setpoint value of said gas generator, in the twin configuration to a law of anticipation in the single-engine configuration.

11. Twin-engine helicopter having a rotary wing comprising at least a first turboshaft engine, referred to as an inoperative engine(4), and at least a second turboshaft engine, referred to as a healthy engine (5), each engine (4, 5) comprising protective stops regulated by a regulation device which define a maximum power regime, **characterized in that** it comprises a device for detecting a malfunction in said inoperative engine (4) and controlling said healthy engine (5), said device comprising:
- a module for detecting an indication of failure of said inoperative engine (4),
- a module for increasing the protective stops of said healthy engine (5) into stops which correspond to a single-engine regime, in the case of a detected indication of failure,
- a module for confirming a failure of said inoperative engine (4),
- a module for controlling an immediate increase in the flow rate of fuel supply of said healthy engine (5), in the event of a confirmed failure, so as to allow an acceleration of the healthy engine (5) without waiting for an automatic regulation of the healthy engine (5) after a fall in speed of said rotary wing resulting from the failure of the inoperative engine (4).
